# EUROPÄISCHE PATENTANMELDUNG

(11) **EP 3 971 096 A1**
(43) Veröffentlichungstag der Anmeldung: **23.03.2022**
(21) Anmeldenummer: 21401036.5
(22) Anmeldetag: 17.09.2021
(51) Int. Cl.: B65B 69/00, B65B 55/24, B01D 46/00

(54) **VORRICHTUNG ZUM KONTAMINATIONSFREIEN AUSTRAG VON RIESELFÄHIGEN ODER SCHÜTTFÄHIGEN STOFFEN MIT HILFE EINES SIEBS**

(30) Priorität: 18.09.2020 EP 20197050
(71) Anmelder: J. Engelsmann AG, 67059 Ludwigshafen am Rhein (DE)
(72) Erfinder: Quindt, Viktor, 67433 Neustadt an der Weinstraße (DE); Liedtke, Joachim, 68163 Mannheim (DE); Kretzu, Christian, 67480 Edenkoben (DE)
(74) Vertreter: Sartorius, Peter

(57) **Zusammenfassung**

Die Erfindung bezieht sich auf eine Vorrichtung zum kontaminationsfreien Austrag von rieselfähigen Stoffen mit Hilfe eines Siebs.

Der Erfindung liegt die Aufgabe zugrunde, einen Siebwechsel bei Vorrichtung zum kontaminationsfreien Austrag von rieselfähigen Stoffen mit Hilfe eines Siebs, insbesondere bei einer Schütteleinrichtung, derart auszubilden, dass beim Siebwechsel auch die kleinsten Staubbestandteile des zu siebenden Guts zurückgehalten werden.

Dadurch wird die Aufgabe erfindungsgemäß durch folgende Merkmale gelöst:
a) ein Gehäuse (2) ist mit einem Anschlusselement (5) ausgestattet;
b) das Anschlusselement (5) weist eine Einlassöffnung (31) auf; über die ein Sieb oder Siebrahmen (3) mit Sieb eingebracht werden kann;
c) die Einlassöffnung (31) ist mit Hilfe eines Foliensacks oder ersten Beutels (9) in verschließbar, der mit seinem einen Ende in einer im Anschlusselement (5) vorgesehenen Vertiefung (49) befestigt und mit Hilfe einer im Volumen veränderbaren oder druckbeaufschlagbaren Dichtung (37) am Anschlusselement (5) abgedichtet werden kann;
d) für einen Siebwechsel kann auf den ersten Beutel (9) ein an eine Montagehilfe (21a) angeschlossener zweiter Beutel (23) aufgebracht werden und mit Hilfe von mindestens einer im Volumen veränderbaren oder druckbeaufschlagbaren Dichtung (38) am Anschlusselement (5) abgedichtet werden;
e) die Einlassöffnung (31) ist am Ende der Siebmontage zusätzlich mit Hilfe eines zweiten Dichtelements (15) oder mit einem an einem Deckel (14) angeordneten Dichtelement (15) abgedichtet;
f) das zweite Dichtelement (15) wird hierzu mit Hilfe einer Andrückvorrichtung (40) gegen den ersten Beutel (9) gedrückt.

## Beschreibung

Die Erfindung betrifft eine Vorrichtung zum kontaminationsfreien Austrag von rieselfähigen oder schüttfähigen Stoffen mit Hilfe eines Siebs.

Es ist bereits ein Werkzeug DE 000019806932 zum kontaminationsfreien Austrag von rieselförmigen Stoffen bekannt. Eine derartige Vorrichtung ist aus einem Prospekt "Jod-Sorptionsfilter Typ MWS" der Firma Krantz Anlagenbau bekannt. Bei dem darin beschriebenen Jod-Sorptionsfilter muss gewährleistet sein, dass das beladene Sorbens kontaminationsfrei in stabile, transportfähige und lagerfähige Behälter oder Gebinde ausgetragen werden kann. Damit der Behälter sich kontaminationsfrei verschließen lässt, ist eine Überladung des Behälters mit kontaminiertem Staub ausgeschlossen. Des Weiteren muss ein einfaches Erfassen des Füllstands des Transportbehälters möglich sein. Ferner ist bekannt, als Transportbehälter ein stabiles Fass zu verwenden, welches einen Wartungssack aus einem flexiblen Kunststoffmaterial umschließt. Der Wartungssack dient zur kontaminationsfreien Aufnahme des rieselfähigen Stoffs aus dem Vorratsbehälter.

Ferner ist eine Vorrichtung EP 3041 49 B1 zum Umfüllen von Prozessmaterial zwischen einem ersten Behältnis und einem zweiten Behältnis bekannt. Essenzielle Bestandteile der Vorrichtung sind zumindest eine Spanneinheit, die einen ersten Spanner und einen zweiten Spanner aufweist, die voneinander unabhängig betätigbar sind, sowie ein schlauchförmiges Linerstück, das sich indirekt zwischen den Behältnissen erstreckt, um den Übergang zwischen den Behältnissen nach außen abzudichten. In der Spanneinheit werden temporär der zugewandte Endabschnitt des Linerstücks und der zugewandte Endabschnitt eines von einem vorherigen Umfüllvorgang stammenden schlauchförmigen Linerrests fixiert. Bei speziellen Anwendungen ist ein Umfüllgerät zwischen die Behältnisse installiert. Das Prozessmaterial kann von sensibler Natur sein - z. B. eine pharmazeutische Komponente - und darf weder von der äußeren Umgebung verunreinigt werden noch in die Umgebung gelangen. Die Behältnisse sind typischerweise Bestandteile einer Produktionsanlage, wie Bigbags, Container oder Fässer.

Das Dokument JP 07191 189 bezieht sich auf eine Vorrichtung mit deren Hilfe der Betrieb erleichtert werden soll, indem ein Dichtungsmittel für einen hitzebeständigen Beutel gelöst wird, wobei der geschweißte Teil eines Filteraufnahmeteils abgetrennt wird und dann ein Filteraufnahmebeutel an einer Filteraustauschöffnung angebracht wird und der hitzebeständige Beutel versiegelt wird. Hierzu wird ein Öffnungs-/Schließdeckel geöffnet und die Öffnung 10a eines Filteraufnahmesacks in eine Austauschöffnung 4 so eingepasst, dass sie den hitzebeständigen Beutel 7 umschließt. Eine Abdichtung erfolgt mit Hilfe von O-Ringen, die in zwei Nuten 6a, 6b eingesetzt werden die am Austauschloch 4 vorgesehen sind. Wird die Schnur 9 gelöst, kann ein Filter 3 durch den Beutel 7 geführt und in dem Aufnahmebeutel untergebracht werden. Der Filteraufnahmeteil wird mit Hilfe eines Schweißvorgangs abgedichtet. Nun ist der Filter 3 perfekt abgedichtet und kann in diesem Zustand abgetrennt werden. Anschließend kann ein neuer Filter 3' in den Filteraufnahmeraum 2 aufgenommen werden. Hierzu werden die O-Ringe 11 und der Restteil des Sacks 13 werden, nach der Montage in den Filteraufnahmesack wird der Aufnahmeteil durch Schweißen abgedichtet. Schließlich wird der Filter 3' in einer bestimmten Position im Montageraum 2 eingebracht und das offene Ende des Beutels 7 wird mit der Schnur 9 festgebunden und der Öffnungs-/Schließdeckel geschlossen. Der Austausch des Filters ist aufwändig und somit teuer und die Abdichtung nicht sicher genug, sodass Partikel in die Umgebungsluft gelangen können.

Der Erfindung liegt die Aufgabe zugrunde, einen einfachen schnellen und damit kostengünstigen kontaminationsfreien Siebwechsel für rieselfähige Substanzen für eine Schütteleinrichtung zu ermöglichen, wobei auch die kleinsten Staubbestandteile des zu siebenden Guts zurückgehalten werden.

Die Aufgabe ist durch folgende Merkmale gelöst:
a) ein Gehäuse ist mit einem Anschlusselement ausgestattet;
b) das Anschlusselement weist eine Einlassöffnung auf, über die ein Sieb oder Siebrahmen mit Sieb eingebracht werden kann;
c) die Einlassöffnung ist mit Hilfe eines Foliensacks oder ersten Beutels verschließbar, der mit seinem einen Ende in einer im Anschlusselement vorgesehenen Vertiefung befestigt und mit Hilfe einer im Volumen veränderbaren oder druckbeaufschlagbaren Dichtung am Anschlusselement abgedichtet werden kann;
d) für einen Siebwechsel kann auf den ersten Beutel ein an eine Montagehilfe angeschlossener zweiter Beutel aufgebracht werden und mit Hilfe von mindestens einer im Volumen veränderbaren oder druckbeaufschlagbaren Dichtung am Anschlusselement abgedichtet werden;

Vorteilhaft ist es auch,
a) die Einlassöffnung ist am Ende der Siebmontage zusätzlich mit Hilfe
   eines zweiten Dichtelements oder mit einem an einem Deckel angeordneten Dichtelement abgedichtet;
b) das zweite Dichtelement wird hierzu mit Hilfe einer Andrückvorrichtung gegen den ersten Beutel gedrückt.

Hierzu ist es vorteilhaft, dass die Andrückvorrichtung aus zwei Schraubenbolzen gebildet ist, die an dem Anschlusselement befestigt sind, an denen der Deckel angeschlossen ist und mit deren Hilfe der Deckel gegen zumindest die eine erste Dichtung gedrückt werden kann.

Vorteilhaft ist es ferner, dass die die Andrückvorrichtung (10 / 40) mit dem Gehäuse (2) und dem Deckel (14) verbunden ist, mit deren Hilfe der Deckel (14) gegen zumindest eine erste Dichtung (15) oder gegen zwei danach angeordnete zweite Dichtungen gedrückt wird, wobei die erste Dichtung gegen die zweite Dichtung gepresst wird, die als erster Beutel ausgebildet ist.

Außerdem ist es vorteilhaft, dass der Deckel und/oder das Anschlusselement mit je einer oder mehreren Aufnahmen oder Schlitzöffnungen versehen ist, in die die Schraubenbolzen eingreifen und dann mit Hilfe je eines an den Schraubenbolzen angeschlossenen Spannelements verstellt und/oder gesichert werden kann.

Vorteilhaft ist es auch, dass für den Siebwechsel der Deckel entfernt und der zweite Beutel auf den ersten Beutel aufgebracht ist.

Ferner ist es vorteilhaft, dass der erste Beutel mit seinem einen Ende in die im Bereich der Außenseite des Anschlusselements vorgesehene umlaufende Vertiefung oder Ringnut eingelassen und/oder gepresst ist und mit Hilfe einer Druckquelle und/oder der im Volumen veränderbaren Dichtung abgedichtet ist, die als umlaufende Dichtung oder Ringdichtung seitlich und/oder parallel von der Vertiefung oder Ringnut verläuft.

Außerdem ist es voreilhaft, dass für den Siebwechsel ein Ende des Beutels an der Stirnseite des Anschlusselements umgeklappt und mit Hilfe von Klebeelementen oder Klebestreifen am Beutel befestigt ist.

In weitere Ausgestaltung der Erfindung es vorteilhaft, dass ein vorderes Ende des zweiten Beutels an eine Außenseite der ringförmigen oder U-förmigen Montagehilfe angeschlossen und durch einen Hohlraum der Montagehilfe hindurchgeführt ist und auf den Außenumfang der Montagehilfe befestigt wird, wobei die Montagehilfe auf das Anschlusselement geschoben ist, dabei den ersten Beutel umgibt und mit seinem Innenumfang den zweiten Beutel gegen die am Außenumfang der Montagehilfe vorgesehene ringförmig verlaufende Dichtung drückt und abdichtet, wobei hierzu die Dichtung mit Hilfe einer Druckquelle in Ihrem Volumen veränderbar ist.

Vorteilhaft ist es auch, dass die Montagehilfe als Rotationskörper oder kreisrunder oder ellipsenförmiger Körper ausgebildet ist, wobei das eine Ende des zweiten Beutels mit Hilfe von Sicherungselementen - wie Klammern - am Außenumfang der Montagehilfe gesichert ist.

Ferner ist es vorteilhaft, dass sich an die Montagehilfe eine Andockeinheit anschließt, die mit Hilfe von an der Montagehilfe vorgesehene Führungselementen geführt ist, wobei die Andockeinheit ein an einem verstellbaren Gestänge angeschlossenes Arretierungsteil aufweist, das an ein Anlageteil festlegbar und/oder arretierbar ist.

Auch ist es von Vorteil, dass das mit einem Stellzylinder verbundene Gestänge von einer die Andockeinheit nicht arretierten Stellung in eine die Andockeinheit an dem Gehäuse an sichernden Stellung verstellbar ist und hierzu das Arretierungsteil an dem Anlageteil festlegbar und/oder arretierbar ist, das mit dem Gehäuse (2) verbunden ist.

In weiterer Ausgestaltung der Erfindung ist es, vorteilhaft, dass die Andockeinheit einen ringförmigen Steg aufweist, der mit Hilfe des Stellzylinders einen vorderen Teil des zweiten Beutels in die in der Montagehilfe vorgesehene Vertiefung drückt und an die parallel zur Vertiefung verlaufende Dichtung anliegt, die mit Hilfe der Druckquelle angedrückt wird.

Vorteilhaft ist es auch, dass die Dichtung deaktiviert werden kann und die Bedienperson mit Hilfe des einen Beutels den Beutel ergreifen und aus einer Nut herausziehen und den Beutel mit Hilfe eines Verschlusses schließen kann und dann den Siebrahmen je nach Arbeitsvorgang aus dem Gehäuse in den Beutel einbringen oder herausnehmen kann.

### Vorteilhaft sind folgende Merkmale:

a) die Montageöffnung ist mit Hilfe des ersten Beutels verschlossen;
b) auf den Außenumfang des Anschlusselements ist der an der Montagehilfe angeschlossene zweite Beutel angeordnet;
c) dass der erste Beutel in der Nut des Anschlusselements aufgenommen ist und die Montagehilfe auf das Anschlusselement aufgeschoben ist und über die Dichtung am Außenumfang des Anschlusselements (5) abgedichtet ist;
d) der erste Beutel kann bei dieser Anordnung aus der Nut des Anschlusselements abgezogen, im zweiten Beutel abgelegt und das neue Sieb durch die Montageöffnung in das Gehäuseinnere geschoben werden;
e) die Dichtung zur Abdichtung des ersten Beutels wird aus der ersten Vertiefung herausgezogen und das Ende des zweiten Beutels in die Vertiefung dichtend eingedrückt.

Hierdurch wird eine einwandfreie Montage sichergestellt und gewährleistet, dass keine Staubpartikel in die Umgebungsluft gelangen, da neben der Abdichtung durch die Beutel, die auch den gesamten Siebrahmen je nach Ausbildung komplett aufnehmen, von einem oder auch von beiden Beuteln umgeben wird, und ferner der Deckel als Abschlussdichtung zusätzlich abdichtet, da er von außen gegen den außenliegenden Beutel gepresst werden kann und dadurch die Abdichtung wesentlich verbessert. Sollten Staubpartikel von den in den Ringnuten aufgenommenen Dichtungen nicht vollständig zurückgehalten werden, kann die Abdichtung auf jeden Fall mit Hilfe des Deckels sichergestellt werden.

Hierzu ist es auch vorteilhaft, dass der erste Beutel mit Hilfe einer Ringdichtung in eine an der Außenseite des Anschlusselements vorgesehenen Ringnut gepresst und abgedichtet ist. Durch die Andrückvorrichtung wird zusätzlich eine einwandfreie Abdichtung sichergestellt.

Nach einem weiteren Merkmal der Erfindung ist es vorteilhaft, dass für den Siebwechsel das Ende des Beutels an der Stirnseite des Anschlusselements umgeklappt und mit Hilfe von Klebeelementen am Beutel befestigt ist. Nach diesem Vorgang kann der erste Beutel in den zweiten Beutel mit dem Sieb eingezogen werden. Mit den Klebestreifen soll das elastische Dichtelement am Beutelabschnitt befestigt werden, damit es nicht verloren geht bzw. vereinzelt wird.

Vorteilhaft ist es auch, dass für den Siebwechsel das vordere Ende des zweiten Beutels eine Montagehilfe U-förmig umgibt und mit Hilfe einer Dichtung das Ende des Beutels gegen die Montagehilfe gedrückt ist und der zweite Beutel den ersten Beutel vollständig umgibt, sodass dieser von dem Anschlusselement abgezogen und das Sieb in den Beutel eingezogen und auf eine Ablage gelegt werden kann.

Vorteilhaft ist die Vorrichtung für die Montage eines neuen Siebs in das Gehäuseinnere der Vorrichtung durch folgende Merkmale:
Die Montageöffnung ist mit Hilfe des ersten Beutels verschlossen;
auf dem Außenumfang des Anschlusselements ist die am zweiten Beutel angeschlossene Montagehilfe angeordnet;
auf dem Außenumfang des an das Anschlusselement befestigten ersten Beutels ist die Montagehilfe aufgeschoben und über die Dichtung am Außenumfang des Anschlusselements abgedichtet;
der erste Beutel kann bei dieser Anordnung aus der Nut des Anschlusselements abgezogen, im zweiten Beutel abgelegt und das neue Sieb durch die Montageöffnung in das Gehäuseinnere geschoben werden,
wobei die Dichtung zur Abdichtung des ersten Beutels aus der ersten Nut gezogen wird und die Dichtung den zweiten Beutel in die Nut dichtend drückt.

Weitere Vorteile und Einzelheiten der Erfindung sind in den Patentansprüchen und in der Beschreibung erläutert und in den Figuren dargestellt.

Dabei zeigen:
- Fig. 1: ein erstes Ausführungsbeispiel einer Vorrichtung zum Sieben von Schüttgütern oder rieselfähigen Stoffen mit einer Einrichtung in der Ausgangssituation für einen kontaminationsfreien Siebwechsel;
- Fig. 2: ein erstes Ausführungsbeispiel einer Vorrichtung zum Sieben von Schüttgütern oder rieselfähigen Stoffen in eine Detailansicht einiger wesentlichen Bauteile mit Anschlusselement Deckel und Andrückvorrichtung;
- Fig.2a: das erste Ausführungsbeispiel einer Vorrichtung zum Sieben von Schüttgütern oder rieselfähigen Stoffen mit im Querschnitt kreisförmigen Dichtelementen;
- Fig.2b: eine perspektivische Ansicht des ersten Ausführungsbeispiels der Vorrichtung zum Sieben von Schüttgütern;
- Fig. 3: eine perspektivische Ansicht des ersten Ausführungsbeispiels der Vorrichtung zum Sieben von Schüttgütern;
- Fig. 4: das eine Ende des ersten Beutels das nach vorne gefaltet und mit Hilfe von Klebestreifen 24 fixiert ist;
- Fig. 5: ein zweiter neuer Beutel, der auf die Montagehilfe gestülpt wird, wobei die Enden mit Klammern fixiert sind;
- Fig. 6: die Montagehilfe 21a wird auf das Anschlusselement 5 geschoben und das vordere Ende des zweiten Beutels in eine Nut eingepresst;
- Fig. 7: eine Andockeinheit;
- Fig. 8: die Andockeinheit wird beidseitig gesichert;
- Fig. 9: die Dichtung ist deaktiviert und die Bedienungsperson ergreift den ersten Beutel von außerhalb und zieht ihn aus der Nut, sodass anschließend der Siebrahmen aus dem Gehäuse in den Beutel eingebracht oder herausgenommen werden kann;
- Fig.10: der Rahmen wird mit Hilfe des Pneumatikzylinders nach vorne bewegt und der Steg presst den zweiten Beutel in die Nut.

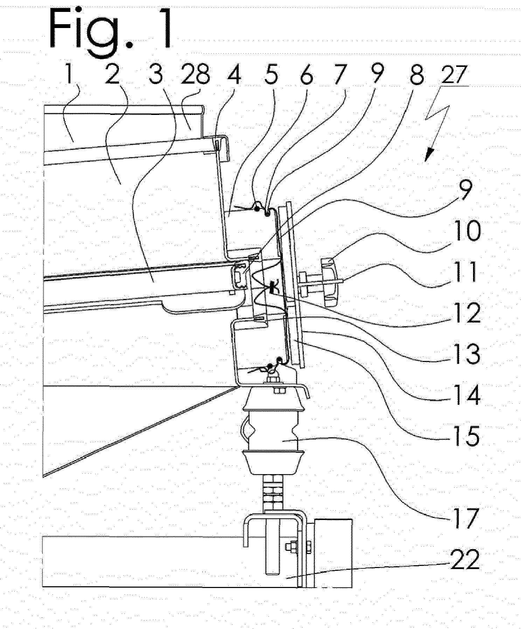

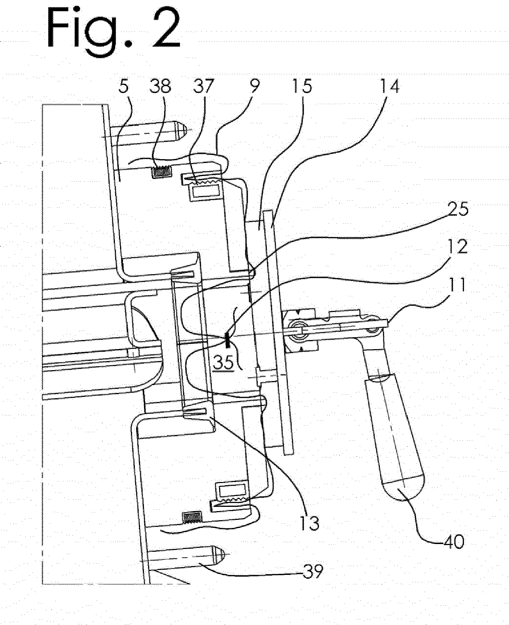

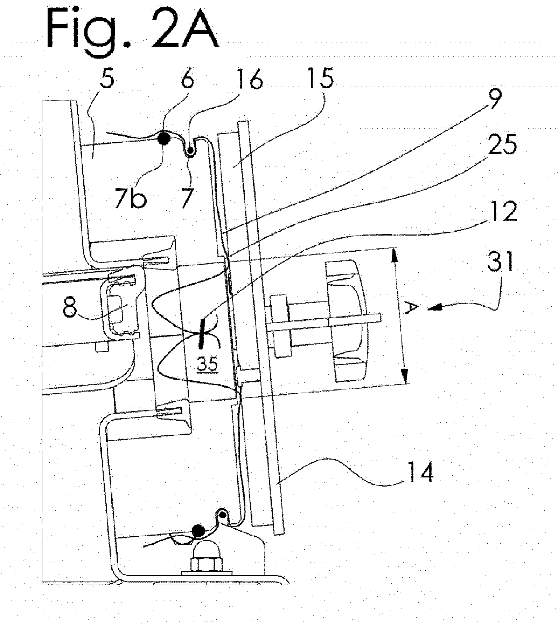

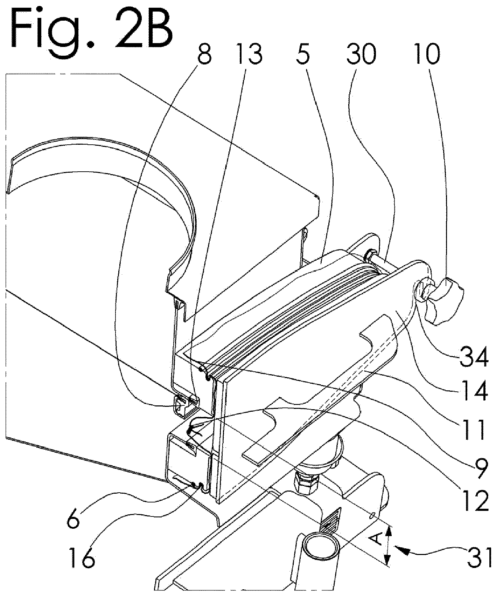

In Fig. 1, 2a und 2b ist eine Vorrichtung 27 zum Sieben von Schüttgütern oder rieselfähigen Stoffen mit einer Einrichtung zum kontaminationsfreien Siebwechsel gezeigt.

Die Vorrichtung 27 besteht aus einem Gehäuse 2 in dem ein ein Sieb aufweisender Siebrahmen 3 angeordnet ist, der je nach Wunsch oder bei einem bestimmten Verschmutzungszustand gegen ein neues Sieb bzw. einen Siebrahmen 3 mit Sieb ausgewechselt werden kann. Das Gehäuse 2 stützt sich mit Hilfe einer elastischen Lagerung 17 auf einem Gestell 20 gemäß Fig.1 ab.

Das Gehäuse 2 weist im oberen Bereich ein Stutzen mit einer Öffnung 1 zur Aufnahme des Schüttguts auf, die mit Hilfe eines Deckels 28 verschlossen werden kann. Am Außenumfang des Deckels 28 ist zwischen Deckel 28 und dem Gehäuse 2 eine Dichtung 4 vorgesehen, mit deren Hilfe der Deckel 28 gegenüber dem Gehäuse 2 abgedichtet werden kann.

Unterhalb des oberen Deckels 28, etwa im mittleren Bereich der Stirnseite des Gehäuses 2, befindet sich ein rohrförmiges bzw. ovales Anschlusselement 5 mit einer Montageöffnung 31 über die der Siebrahmen 3 mit aufgebrachtem Sieb in das Gehäuse 2 eingebracht oder auch entfernt werden kann, wenn ein Siebwechsel erforderlich ist.

Die Montageöffnung 31 ist derart groß und rechteckförmig ausgebildet, dass der Siebrahmen 3 mit dem Sieb durch die an der Montagehilfe (21a) vorgesehene Führungselementen 53 geführt werden kann. Die Montageöffnung 31 wird mit Hilfe eines Deckels 14 verschlossen. Die Abdichtung des Deckels 14 erfolgt über eine Dichtung 15, die zwischen dem Deckel 14 und der Stirnseite bzw. dem vorderen Ende des Abschlusselements 5 eingebracht ist. Damit eine einwandfreie Abdichtung erzielt wird, befindet sich auf der nach außen gerichteten Stirnfläche, die in etwa der Dichtfläche des Abschlusselements 5 entspricht, eine umlaufende ringförmige etwas hervorstehende Dichtfläche bzw. schmale Dichtfläche 25, die als Dichtlippe ausgebildet ist, gegen die die Dichtung 15 gepresst werden kann.

Der auf die Montageöffnung 31 aufbringbare Deckel 14 wird über die Dichtung 15 abgedichtet. Wie aus Fig. 1 ferner hervorgeht, gehört zum Deckel 14 eine ein Spannelement 40 oder Schraubgriff 10 und einem Griff 11. Zwischen dem Deckel 14 und der Montageöffnung 31 ist eine Dichtung 13 vorgesehen, sodass die Montageöffnung 31 kontaminationsfrei abgedichtet werden kann und während des Arbeitseinsatzes keine Partikel nach außen dringen können.

Der Anpressdruck für die Dichtung 15 wird mit Hilfe des Deckels 14 und je einem Spannelement 10, 40 erzielt. Der Deckel 14 weist im Bereich seiner beiden Außenkannten je eine U-förmige nach unten gerichtete schlitzförmige Öffnung 34 (Fig. 2b) auf, die von oben auf die an dem Anschlusselement 5 vorgesehenen Schraubbolzen gesetzt werden können. Die beiden Spannelemente 10 werden auf das Gewinde der Schraubenbolzen gedreht und drücken dadurch den Deckel 14 gegen die Oberfläche der Dichtfläche 25 und auch gegen einen Beutel 9, der gemäß Fig. 1 die Öffnung 31 des Anschlusselements 5 und somit den im Inneren der Vorrichtung 27 eingebrachten Siebrahmen 3 so abdichtet, dass keine Partikel aus dem Inneren der Vorrichtung 27 zum Sieben von Schüttgütern nach außen dringen können. Fig. 1 zeigt die Ausgangssituation für einen kontaminationsfreien Siebwechsel, wobei sich der Siebrahmen 3 im Gehäuseinneren der Vorrichtung 27 befindet.

Wie aus Fig. 2a ferner hervorgeht, sind am Außenumfang des Abschlusselements zwei nebeneinander angeordnete Ringnuten 7 und 7b vorgesehen, die zur Aufnahme je einer Dichtung, insbesondere Ringdichtungen 6 und 16, dienen. Die Dichtung 6 ist ständig am Außenumfang des Anschlusselements 5 vorgesehen.

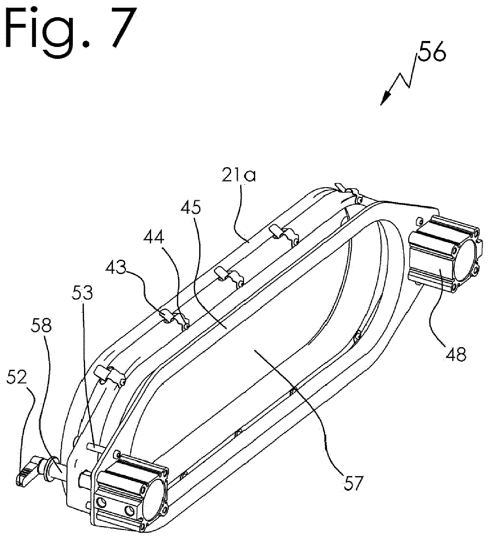

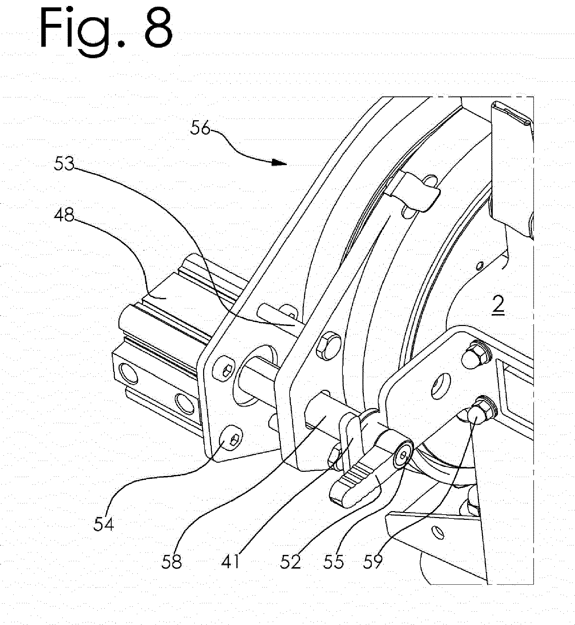

Die einzelnen Montageschritte zum Einbringen des Siebrahmens 3 mit aufgebrachtem Sieb in das Innere des Gehäuses 2 der Vorrichtung 27 und die Herausnahme des Siebrahmens aus dem Inneren des Gehäuses 2 sind in den Fig. 1 bis 10 veranschaulicht.

Wie bereits erwähnt zeigt Fig. 1 den in das Gehäuse 2 eingebrachten Siebrahmen 3 und damit auch die betriebsfertige Vorrichtung 27, wobei die Schüttelbewegung des Siebrahmens 3 mit Hilfe von in der Zeichnung nicht dargestellten Motoren erfolgt.

Der Siebrahmen 3 besteht aus einem rechteckförmigen Gestell mit dichtend auf dem Siebrahmen aufgebrachtem feinmaschigen Sieb, dessen Sieböffnungen entsprechend dem zu siebenden Gut ausgewählt werden. Nach einem längeren Arbeitseinsatz ist es erforderlich, den Siebrahmen auszuwechseln, zu reinigen oder durch einen neuen Siebrahmen zu ersetzten. Bei giftigem Schüttgut muss der Rahmenwechsel kontaminationsfrei erfolgen.

In Fig. 1 befindet sich die Vorrichtung 27 zum Sieben von Schüttgütern oder rieselfähigen Stoffen in der Ausgangssituation, d. h. in Betriebsstellung und ist bereit für einen kontaminationsfreien Siebwechsel.

Hierzu ist in der Darstellung gemäß Fig. 2a und 2b das Anschlusselement 5 mit Hilfe der beiden Dichtungen 15 des Deckels 14 und des als Dichtung eingesetzten ersten Beutels 9 abgedichtet, wobei der Beutel 9 die Öffnung 31 des Anschlusselements 5 umgibt und verschließt,

Eine Detailansicht ist in Fig. 2a veranschaulicht, wobei einige wesentliche Vorrichtungsteile in einem größeren Maßstab dargestellt sind. Das Anschlusselement 5 ist mit der Dichtung 5 versehen bzw. abgedichtet und dichtet die Öffnung, nachstehend als Montageöffnung 31 bezeichnet, ab, durch die der Siebrahmen 3 geschoben wird. Der Beutel 9 verschließt die Öffnung bzw. die Montageöffnung 31 des Anschlusselements 5, durch das die Siebrahmen 3 in die Vorrichtung zum Sieben von Schüttgütern 27 ein- bzw. ausgebracht werden können. Der Beutel 9 wird mit dem elastischen Dichtelement 16 gehalten, das als Dichtring ausgebildet ist. Das elastische Dichtelement 16 wird in der umlaufenden Nut 7 aufgenommen.

Die Dichtfläche 25 (Fig. 2a) und die Dichtung 15 dichten direkt am Ende des Anschlusselements 5 die Öffnung 31 ab, um Staub des Schüttguts aus dem Inneren der Vorrichtung 27 zum Sieben von Schüttgütern im Bereich zwischen Beutel 9 und Anschlusselement 5 und insbesondere aus der umlaufenden Nut 7 fernzuhalten. Eine kleine Erhöhung auf der Dichtfläche 25, die als Dichtlippe ausgebildet ist, erhöht die Flächenpressung im abzudichtenden Bereich erheblich. Dadurch werden eventuelle Falten eines Beutels 23 bzw. 9 verpresst und staubdicht.

Eine weitere Dichtung 8, die als Ringdichtung ausgebildet ist und den Sieb-rand umgibt, dient dazu, den Siebrahmen 3 gegenüber dem inneren Teil des Gehäuses 2 abzudichten. Das ist erforderlich, um zu gewährleisten, dass kein Schüttgut den Siebrahmen umgeht und über den Bereich seiner Außenkante verlässt und somit die Qualität der Siebung beeinträchtigt wäre.

Fig. 2a zeigt den Deckel 14, an dem auch die Dichtung 15 befestigt ist. Er ist mit Hilfe der beiden Schlitzöffnungen 34 auf Gewindebolzen 30 gesetzt und wird durch die Spannelemente 10 an das Anschlusselement 5 gepresst.

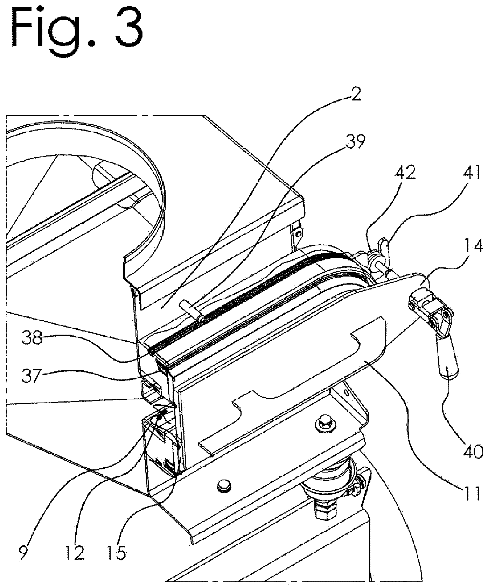

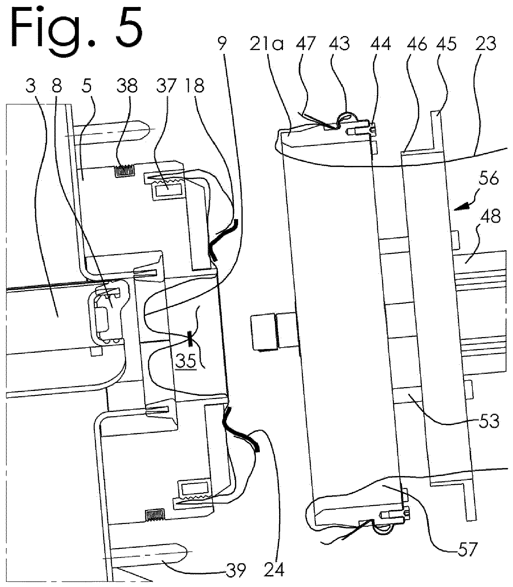

Wird gemäß Fig. 2 bzw. 3 das Spannelement 10 oder 40 gelöst und der Deckel 14 mit Dichtung 15 entfernt, kann ein Ende 18 des ersten Beutels 9 nach vorne gefaltet werden (vergl. Fig. 5). Mit Hilfe des elastischen Dichtelements 16 in der umlaufenden Nut wird das vordere Ende des Beutels 9 dichtend gehalten und durch mehrere Klebestreifen 24 mit dem vorderen Ende des Beutels 9 verbunden.

In Fig. 3 ist gemäß wie in Figur 2 bis 10 das zweite Ausführungsbeispiel erläutert. Es wird ein Teil des vorderen Endes des Gehäuses 2 dargestellt, das eine Andockeinheit 56 dargestellt. Der Deckel 14 ist mit Hilfe eines Hakens 41 und eines Hakengegenstücks 42 eingehängt und wird durch Betätigen des Spannelements 40, das als Andrückvorrichtung ausgebildet ist, gegen das Anschlusselement 5 gedrückt. Zur leichteren Handhabung des Deckels 14 ist dieser mit dem Griff 11 ausgestattet. Das Spannelements 40 weist eine Kniehebeleinrichtung oder ein Teleskopgestänge auf, das in einer im Deckel vorgesehenen Bohrung drehbar gelagert ist. An einem Ende des Gestänges ist ein Anlageteil bzw. Haken 41 vorgesehen, das an eine nach oben offene Fangausnehmung oder Hakengegenstück 42 angeschlossen ist. Dreht man das Spannelement z. B. im Uhrzeigerdrehsinn, so verkürzt sich das Gestänge und presst den Deckel 14 gegen die Dichtungen.

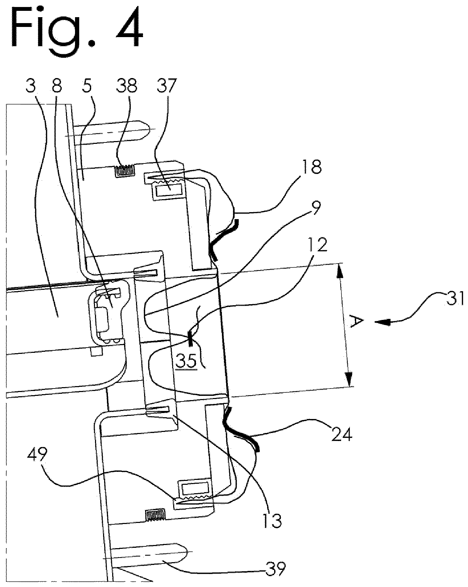

Jetzt kann gemäß Fig. 4 das Ende 18 des ersten Beutels 9 nach vorne gefaltet und mit einem Klebestreifen 24 fixiert werden. Die Klebestreifen 24 bewirken, dass das Ende des Beutels 18 in der gewünschten Position bleibt.

Der erste Beutel 9 ist mit seinem einen Ende in eine im Bereich der Außenseite des Anschlusselements 5 vorgesehene umlaufende Vertiefung oder Ringnut 49 eingelassen und/oder gepresst und mit Hilfe einer Druckquelle 50 und/oder einer im Volumen veränderbaren Dichtung 37 abgedichtet ist, die als umlaufende Dichtung oder Ringdichtung seitlich und/oder parallel zu der Vertiefung oder Ringnut 49 eingelassen und/oder gepresst ist und mit Hilfe der Druckquelle 50 und/oder der im Volumen veränderbaren Dichtung 37 abgedichtet ist.

Ein vorderes Ende 47 des zweiten Beutels 23 ist an die Außenseite einer ringförmigen oder U-förmigen Montagehilfe 21a mit Hilfe von Klammern 43 und einer Schraube 44 gesichert. Hierzu wird das Ende 47 des zweiten Beutels 23 durch einen Hohlraum 57 der Montagehilfe 21a geführt und dann auf dem Außenumfang der Montagehilfe 21a befestigt.

Anschließend wird die Montagehilfe 21a auf den Außenumfang des Anschlusselements 5 geschoben, dadurch wird der erste Beutel 9 von dem zweiten Beutel umgeben. Das vordere Ende 47 des zweiten Beutels 23 legt sich mit seinem Innenumfang gegen eine am Außenumfang der Montagehilfe 21a vorgesehene ringförmig verlaufende Dichtung 38 an, wobei hierzu die Dichtung 38 mit Hilfe einer Druckquelle 51 in ihrem Volumen verändert und gegen das vordere Ende 47 des zweiten Beutels 23 gepresst wird.

Die Montagehilfe 21a ist als Rotationskörper oder kreisrunder oder ellipsenförmiger Körper ausgebildet. Die Dichtung 38 dichtet das Anschlusselement 5 gegenüber dem neuen Beutel 23 ab.

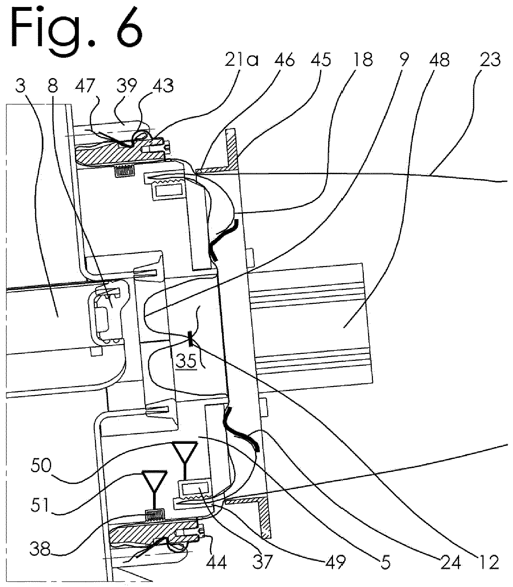

Die in Fig. 6 dargestellten Bolzen 39 sind nicht unbedingt erforderlich, sollen aber der Verformung der Montagehilfe 21a entgegenwirken, um so die Abdichtung zu verbessern. Falls die Montagehilfe 21a ausreichend formstabil ist, kann auf die Bolzen 39 verzichtet werden.

Fig. 6 zeigt auch, wie der Beutel 9 mit dem Verschlusselement 12 und der elastischen Dichtung 38 mit Klebestreifen 24 befestigt war. Der zweite Beutel 23 befindet sich zwischen Anschlusselement 5 und Montagehilfe 21a. Nun wird die Dichtung 38 mit Druckluft betätigt. Die Druckluft wird von der Druckluftquelle 51 bereitgestellt. Dadurch wird der Beutel 23 am Anschlusselement 5 fixiert und abgedichtet.

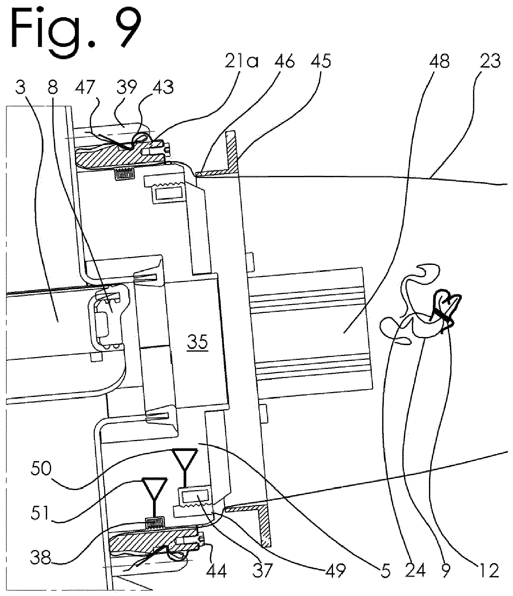

Nun wird gemäß Fig. 9 die Dichtung 37 deaktiviert. Anschließend wird durch die Bedienperson der Beutel 23 erfasst und aus der Nut 49 gezogen. An dem Beutel 9 befinden sich auch das Verschlusselement 12 und die Klebestreifen 24, die den Beutel 9 verschließen. Anschließend kann auch der Siebrahmen 3 aus dem Gehäuse 2 in den Beutel 23 eingebracht werden oder umgekehrt. Je nachdem, ob gerade ein Siebrahmen in das Gehäuse 2 eingebracht oder entfernt werden soll.

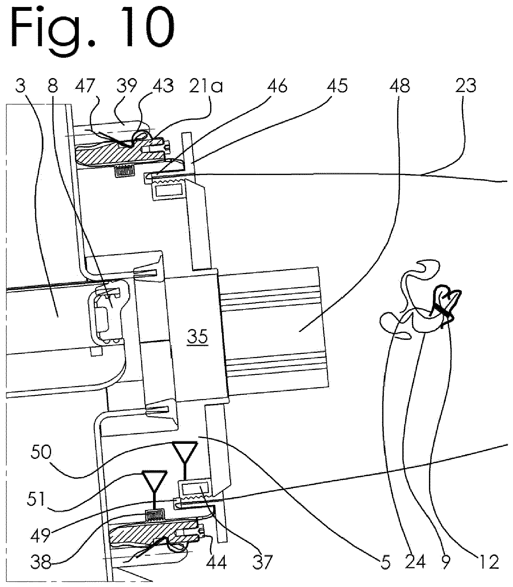

Der Beutel 9, der mit der Dichtung 12 vom Anschlusselement 5 abgezogen ist, wird manuell in den zweiten Beutel 23 gezogen. In Fig. 9 und 10 sind diese Teile als Knäuel dargestellt. Der erste Beutel 9 verbleibt nun im zweiten Beutel 23.

Gemäß Fig. 10 wird der Rahmen mit Steg 45 durch einen Pneumatik Zylinder 48 nach vorne bewegt und presst dadurch den Beutel 23 in die Nut 49. Anschließend wird die Dichtung 37 betätigt und dabei der Rahmen mit Steg 45 wieder zurückgefahren. Dabei verbleibt der Beutel in der Nut 49 eingeklemmt und wird durch die Dichtung 37 abgedichtet.

Der Beutel 9, sowie das Verschlusselement 12, das mit dem Klebestreifen 24 befestigt ist, ist im Beutel 23 kontaminationsfrei eingeschlossen. Anschließend kann im nächsten Schritt der Beutel 23 zwischen den Verschlüssen 12 durchtrennt und entsorgt werden. Die Demontage des Siebrahmens 3 aus dem Gehäuseinnern der Vorrichtung 27 ist damit kontaminationsfrei abgeschlossen.

### Bezugszeichenliste

- 1: Stutzen mit Öffnung
- 2: Gehäuse
- 3: Siebrahmen
- 4: Dichtung
- 5: Anschlusselement = Gehäuse
- 6: Dichtung
- 7: umlaufende Nut
- 8: Dichtung
- 9: Beutel
- 10: Spannelement, Schraubgriff
- 11: Griff
- 12: Verschlusseinrichtung
- 13: Dichtung
- 14: Deckel
- 15: Dichtung
- 16: Dichtung, Ringdichtung
- 17: elastische Lagerung
- 18: Ende des Beutels
- 19: Ablage
- 20: Gestell der Ablagefläche
- 21: ellipsenförmige Montagehilfe
- 23: Beutel (komplett)
- 24: Klebestreifen
- 25: Dichtfläche, Dichtlippe
- 27: Vorrichtung zum Sieben von Schüttgütern
- 28: Deckel
- 30: Schraubenbolzen, Gewindebolzen
- 31: Öffnung = Montageöffnung
- 32: Umlaufende Nut (Montagehilfe Teil 21)
- 34: Schlitzöffnung
- 37: Dichtung
- 38: Dichtung
- 39: Bolzen
- 40: Spannelement, Andrückvorrichtung
- 41: Anlageteil, Haken
- 42: Hakengegenstück
- 43: Klammer
- 44: Schraube
- 45: Rahmen mit Steg
- 46: Steg
- 47: Enden des Beutels 23
- 48: Pneumatik-Zylinder, Elektrozylinder
- 49: Nut
- 50: Druckquelle
- 51: Druckquelle
- 52: Arretierungsteil
- 53: Führung
- 54: Schraube
- 55: Schraube
- 56: Andockelement
- 57: Hohlraum von Montagehilfe 21a
- 58: Gestänge

## Patentansprüche

**1.** Verfahren zur Verwendung einer Vorrichtung zum kontaminationsfreien Austrag von rieselfähigen oder schüttfähigen Stoffen mit Hilfe eines Siebs, **gekennzeichnet durch folgende Merkmale:**
a) ein Gehäuse (2) ist mit einem Anschlusselement (5) ausgestattet;
b) das Anschlusselement (5) weist eine Einlassöffnung (31) auf; über die ein Sieb oder Siebrahmen (3) mit Sieb eingebracht werden kann;
c) die Einlassöffnung (31) ist mit Hilfe eines Foliensacks oder ersten Beutels (9) in verschließbar, der mit seinem einen Ende in einer im Anschlusselement (5) vorgesehenen Vertiefung (49) befestigt und mit Hilfe einer im Volumen veränderbaren oder druckbeaufschlagbaren Dichtung (37) am Anschlusselement (5) abgedichtet werden kann;
d) für einen Siebwechsel kann auf den ersten Beutel (9) ein an eine Montagehilfe (21a) angeschlossener zweiter Beutel (23) aufgebracht werden und mit Hilfe von mindestens einer im Volumen veränderbaren oder druckbeaufschlagbaren Dichtung (38) am Anschlusselement (5) abgedichtet werden;

**2.** Vorrichtung nach Anspruch 1,
**dadurch gekennzeichnet,**
a) **dass** die Einlassöffnung (31) ist am Ende der Siebmontage zusätzlich mit Hilfe eines zweiten Dichtelements (15) oder mit einem an einem Deckel (14) angeordneten Dichtelement (15) abgedichtet;
b) das zweite Dichtelement (15) wird hierzu mit Hilfe einer Andrückvorrichtung (40) gegen den ersten Beutel (9) gedrückt.

**3.** Vorrichtung nach Anspruch 1,
**dadurch gekennzeichnet,**
**dass** die Andrückvorrichtung (10 / 40) mit dem Gehäuse (2) und dem Deckel (14) verbunden ist, mit deren Hilfe der Deckel (14) gegen zumindest eine erste Dichtung (15) oder gegen zwei danach angeordnete zweite Dichtungen gedrückt wird, wobei die erste Dichtung (15) gegen die zweite Dichtung gepresst wird, die als erster Beutel (9) ausgebildet ist.

**3.** Vorrichtung nach Anspruch 1 oder 2,
**dadurch gekennzeichnet,**
**dass** der Deckel (14) und/ oder das Anschlusselement (5) mit je einer oder mehreren Aufnahmen oder Schlitzöffnungen (34) versehen ist, in die die Schraubenbolzen (30) eingreifen und dann mit Hilfe je eines an den Schraubenbolzen angeschlossenen Spannelements (10) verstellt und/oder gesichert werden kann.

**4.** Vorrichtung nach einem der vorhergehenden Ansprüche
**dadurch gekennzeichnet,**
**dass** für den Siebwechsel der Deckel (14) entfernt und der zweite Beutel (23) auf den ersten Beutel (9) aufgebracht ist.

**5.** Vorrichtung nach einem der vorhergehenden Ansprüche
**dadurch gekennzeichnet,**
**dass** der erste Beutel (9) mit seinem einen Ende in die im Bereich der Außenseite des Anschlusselements (5) vorgesehene umlaufende Vertiefung oder Ringnut (49) eingelassen und/oder gepresst ist und mit Hilfe einer Druckquelle (50) und/oder der im Volumen veränderbaren Dichtung (37) abgedichtet ist, die als umlaufende Dichtung oder Ringdichtung seitlich und/ oder parallel von der Vertiefung oder Ringnut (49) verläuft.

**6.** Vorrichtung nach einem der vorhergehenden Ansprüche
**dadurch gekennzeichnet,**
**dass** für den Siebwechsel ein Ende (18) des Beutels (9) an der Stirnseite des Anschlusselements (5) umgeklappt und mit Hilfe von Klebeelementen oder Klebestreifen (24) am Beutel (9) befestigt ist.

**7.** Vorrichtung nach einem der vorhergehenden Ansprüche
**dadurch gekennzeichnet,**
**dass** ein vorderes Ende des zweiten Beutels (23) an eine Außenseite der ringförmigen oder U-förmigen Montagehilfe (21a) angeschlossen und durch einen Hohlraum (57) der Montagehilfe (21a) hindurchgeführt ist und auf den Außenumfang der Montagehilfe (21a) befestigt wird, wobei die Montagehilfe (21a) auf das Anschlusselement (5) geschoben ist, dabei den ersten Beutel (9) umgibt und mit seinem Innenumfang den zweiten Beutel (23) gegen die am Außenumfang der Montagehilfe vor-gesehene ringförmig verlaufende Dichtung (38) drückt und abdichtet, wobei hierzu die Dichtung (38) mit Hilfe einer Druckquelle (51) in Ihrem Volumen veränderbar ist.

**8.** Vorrichtung nach einem der vorhergehenden Ansprüche
**dadurch gekennzeichnet,**
**dass** die Montagehilfe (21a) als Rotationskörper oder kreisrunder oder ellipsenförmiger Körper ausgebildet ist, wobei das eine Ende des zweiten Beutels (23) mit Hilfe von Sicherungselementen wie Klammern (43) am Außenumfang der Montagehilfe (21a) gesichert ist.

**9.** Vorrichtung nach einem der vorhergehenden Ansprüche
**dadurch gekennzeichnet,**
**dass** sich an die Montagehilfe (21a) eine Andockeinheit (56) anschließt, die mit Hilfe von an der Montagehilfe (21a) vorgesehene Führungselementen (53) geführt ist, wobei die Andockeinheit (56) ein an einem verstell-baren Gestänge (58) angeschlossenes Arretierungsteil (52) aufweist, das an ein Anlageteil (41) festlegbar und/oder arretierbar ist.

**10.** Vorrichtung nach Anspruch 9
**dadurch gekennzeichnet,**
**dass** das mit einem Stellzylinder (48) verbundene Gestänge (58) von einer die Andockeinheit (56) nicht arretierten Stellung in eine die Andockeinheit (56) an dem Gehäuse (2) sichernden Stellung verstellbar ist und hierzu das Arretierungsteil (52) an dem Anlageteil (41) festlegbar und/oder arretierbar ist, das mit dem Gehäuse (2) verbunden ist.

**11.** Verfahren zur Verwendung der Vorrichtung nach Anspruch 1
**dadurch gekennzeichnet,**
**dass** die Andockeinheit (56) einen ringförmigen Steg (46) aufweist, der mit Hilfe des Stellzylinders (48) einen vorderen Teil des zweiten Beutels (23) in die in der Montagehilfe (21a) vorgesehene Vertiefung (49) drückt und an die parallel zur Vertiefung (49) verlaufende Dichtung (37) anliegt, die mit Hilfe der Druckquelle (50) angedrückt wird.

**12.** Verfahren zur Verwendung der Vorrichtung
nach einem der vorhergehenden Ansprüche
**dadurch gekennzeichnet,**
**dass** die Dichtung (37) deaktiviert werden kann und die Bedienperson mit Hilfe des Beutels (23) den Beutel (9) ergreifen und aus einer Nut (49) herausziehen und den Beutel (9) mit Hilfe eines Verschlusses schließen kann und dann den Siebrahmen (3) je nach Arbeitsvorgang aus dem Gehäuse (2) in den Beutel (23) einbringen oder herausnehmen kann.

**13.** Vorrichtung zum kontaminationsfreien Austrag von rieselfähigen oder schüttfähigen Stoffen mit Hilfe eines auswechselbaren Siebs,
**gekennzeichnet durch folgende Merkmale:**
a) die Montageöffnung (31) ist mit Hilfe des ersten Beutels (9) verschlossen;
b) auf den Außenumfang des Anschlusselements (5) ist der an der Montagehilfe (21a) angeschlossene zweite Beutel (23) angeordnet;
c) dass der erste Beutel in der Nut (49) des Anschlusselements (5) aufgenommen ist und die Montagehilfe (21a) auf das Anschlusselement (5) aufgeschoben ist und über die Dichtung (38) am Außenumfang des Anschlusselements (5) abgedichtet ist;
d) der erste Beutel (9) kann bei dieser Anordnung aus der Nut (5) des Anschlusselements (5) abgezogen, im zweiten Beutel (23) abgelegt und das neue Sieb **durch** die Montageöffnung (31) in das Gehäuseinnere geschoben werden;
e) die Dichtung (37) zur Abdichtung des ersten Beutels (9) wird aus der ersten Vertiefung (59) herausgezogen und das Ende des zweiten Beutels (23) in die Vertiefung (49) dichtend eingedrückt.
